# EUROPEAN PATENT APPLICATION

(11) **EP 1 081 952 A2**
(43) Date of publication of application: **07.03.2001**
(21) Application number: 00307363.2
(22) Date of filing: 29.08.2000
(51) Int. Cl.: H04N 7/18

(54) **Video monitoring equipment**

(30) Priority: 30.08.1999 JP 24328199
(71) Applicant: MATSUSHITA ELECTRIC INDUSTRIAL CO., LTD., Kadoma-shi, Osaka (JP)
(72) Inventor: Nakamura, Manabu, Midori-ku, Yokohama-shi (JP); Higashimura, Mamoru, Midori-ku, Yokohama-shi (JP); Hamada, Junichi, Midori-ku, Yokohama-shi (JP)
(74) Representative: Mercer, Christopher Paul

(57) **Abstract**

Heretofore, it has been difficult to acquire a necessary image efficiently, when conducting remote supervision action via a network. Especially, it has been difficult to operate a remote device in synchronism with a supervisory image. In an image transmission system for transmitting a supervisory image via a network, a video monitoring equipment (201) is equipped with an image input section (204) for processing an input image, an image encoding section (205), an encoded image preservation section (210), an image communication section (207) for receiving a control request and conducting data communication, and an external device control section (209) for controlling a video output control device which effects input and output control of a plurality of images. As a result, it becomes possible to control devices from a client terminal (107) installed in a remote place, while watching the image.

## Description

### BACKGROUND OF THE INVENTION

### Field of the Invention

The present invention relates to a supervisory system for transmitting an alarm signal and an image of a supervisory camera to a terminal of a remote place through a network. In particular, the present invention relates to a supervisory system having a device control function and capable of efficiently transmitting data of a supervisory camera.

### Description of the Related Art

Conventional video monitoring equipments are capable of transmitting images taken in from a video output device such as a directly connected camera or a video switcher and effecting control of pan, tilt, zoom, focus, iris, and so on of a camera directly connected to the above described video monitoring equipment.

Furthermore, in the conventional video output control device, operation is conducted from a controller or a personal computer directly connected to the control device, and video processing such as video input/output switchover, multiplexing, and storage can be conducted.

In the above described conventional video monitoring equipment, however, operation can be conducted only from a controller directly connected to a video output control device, and it is very difficult to conduct device control from a remote place.

Furthermore, in recent years, there is a device for converting a control signal via a network and controlling a device. However, this is a device independent of a video monitoring equipment, and it is difficult to control the device precisely corresponding to images.

### SUMMARY OF THE INVENTION

An object of the present invention is to provide a video monitoring equipment which solves the above described problems of the conventional techniques and which allows the user to control devices from a client terminal installed in a remote place while watching an image, by providing an external device control device to control a video output control device for effecting input and output control of various images via an external control line.

A video monitoring equipment includes an image input section for receiving images fed from a plurality of image pickup sections for picking up image information of a predetermined supervisory region via a video output control device, an external device control section for controlling the video output control device, a central processing section for taking charge of whole processing of the video monitoring equipment, an image encoding section for encoding an image inputted by the image input section, an encoded image preservation section for storing the image encoded by the image encoding section and effecting reproduction control on the free time axis, and a communication section for conducting data transmission and reception between it and a client terminal via a network. It is made possible to easily control devices from a client terminal installed in a remote place while watching the image.

Furthermore, by using the video switchover device for effecting switchover on combinations of a plurality of video inputs and outputs as the video output control device, it is made possible to control the video switchover device and distribute video outputs of a plurality of image pickup sections to the client terminal via a network.

Furthermore, the external device control section includes a table storage section and a command conversion section. The table storage section stores a table for associating output terminal numbers of the video switchover device with input terminal numbers of the video monitoring equipment. The command conversion section converts a specified input terminal number to an output terminal number of the video switchover device and outputs a command for controlling the video switchover device. It is made possible for the supervisory side of the client terminal side to access without being conscious of the output number of the video switchover device.

Furthermore, the external device control section includes a sequence information storage section and a sequence processing section. The sequence information storage section stores the order of the video switchover and a time interval for each of a plurality of video inputs. The sequence processing section executes the input video switchover. It is made possible to distribute an image obtained by conducting switchover on a plurality of video inputs one after another, to the client terminal via the network.

Furthermore, the image input section includes a video input switchover section for effecting switchover on a plurality of video inputs under the control of the central processing section. Furthermore, the encoded image preservation section includes a time order image storage section for storing images in the time axis order. By adopting such a configuration, it is made possible to switch over images distributed to a plurality of monitors simultaneously, upon receiving a request given by an arbitrary client terminal.

Furthermore, the image input section includes a video input switchover section for effecting switchover on a plurality of video inputs under the control of the central processing section. The encoded image preservation section includes a terminal number image storage section for storing an image for each video input terminal number, and a reproduction control section for effecting reproduction control on the free time axis in association with a video input terminal number. By using such a configuration, it is thus made possible to distribute images corresponding to different video inputs, simultaneously to a plurality of client terminals.

Furthermore, there is included a user information administration section which in turn includes a user information storage section and a user authentication section. The user information storage section stores a table for associating user IDs with accessible video input terminal numbers. The user authentication section conducts user authentication on a video input terminal number on the basis of user information received by the communication section. By adopting such a configuration, distribution of images in association with user IDs and access control such as control of external devices are made possible.

Furthermore, there are included a command storage section for storing an association table between input commands and output commands, and a command conversion section for converting a command received from a client terminal, by referring to the command storage section. By adopting such a configuration, it is made possible to control a plurality of image pickup sections connected to the video switchover device.

Furthermore, there are included a command storage section for storing an association table between input commands and output commands, and a command conversion section for converting a command received from a client terminal, by referring to the command storage section. By adopting such a configuration, it is made possible to control an image recording device connected to the video switchover device.

Furthermore, by using a video multiplexing device for multiplexing images fed from a plurality of cameras, as a video output control device, it is possible to control a video multiplexing device and communicate an image obtained by switching over or multiplexing video outputs of a plurality of image pickup sections connected to the video multiplexing device, via a network.

Furthermore, the external device control section includes a command storage section and a command conversion section. The command storage section stores an association table of input commands and output commands. The command conversion section converts a command received from a client terminal, by referring to the command storage section. By adopting such a configuration, it is made possible to control a plurality of image pickup sections connected to the video multiplexing device.

Furthermore, the external device control section includes a command storage section and a command conversion section. The command storage section stores an association table of input commands and output commands. The command conversion section converts a command received from a client terminal, by referring to the command storage section. By adopting such a configuration, it is made possible to control an image recording device connected to the video multiplexing device.

Furthermore, the external device control section includes a command expansion section, a command output control section, and a timer. The command expansion section expands a series of control instructions for controlling the video multiplexing device to individual control commands. The command output control section outputs control commands expanded by the command expansion section, at specified time intervals. The timer administers time. By adopting such a configuration, it is made possible to control the image recording device over a series of a plurality of operations by one click or one button operation so as not cause time fluctuation or delay due to a network.

A video recording device which is a device capable of recording a plurality of images while effecting switchover on a plurality of images is used as a video output control device. It is made possible to control the video recording device and communicate images of a plurality of image pickup sections, via the network.

Furthermore, the external device control section includes an alarm information administration section for receiving an alarm and recording hysteresis, a command input and output section for conducting data transmission and reception with the video recording device, and an alarm information conversion section responsive to a request sent from a client terminal via the network for retrieving data of the alarm information administration section and converting a command. It is made possible to retrieve alarm image information recorded in the video recording device, via the network.

Furthermore, the external device control section includes an information input and output section for acquiring display information from the video recording device via a control line, and a display data generation section for generating display data on the basis of acquired display information. As a result, information acquired from the video recording device is converted to character information and delivered to a client terminal via the network. Thus the information can be made easy to read.

Furthermore, the external device control section includes an information conversion section for converting a command which has been sent via the network by clicking once on the client terminal. It is possible to reproduce a stored image by one click.

Furthermore, the external device control section includes an information conversion section for converting video information to character information, and an information preservation section for preserving information converted by the information conversion section. As a result, the video information can be taken out as character information.

Furthermore, the external device control section includes a command reception section for receiving a control signal from the client terminal via the network, a time administration section for administering the current time, and a command control section for interpreting the received command and sending control signals to the time administration section and external devices to attain time synchronization. It is made possible to attain time synchronization between external devices and the video monitoring equipment.

Furthermore, the external device control section includes a command output section for receiving a command from the client terminal via the network. It becomes possible to control a plurality of devices simultaneously.

Furthermore, the external device control section includes a command output conversion section for receiving a command from the client terminal via the network, and a command output section for transmitting control commands to respective terminals. It is made possible to control a plurality of devices simultaneously by one click.

In the case where line control is effected, information exchange is conducted with the network, and information fed from the network is received by an information reception section. It becomes possible to alter the operation according to the circuit class, from a circuit class storage section.

As evident from the description heretofore made, in a video monitoring equipment according to the present invention, an external device control section is provided to effect centralized control of external devices. As a result, device control can be effected easily from a client terminal installed in a remote place while watching an image. It is not necessary to go to the local side to effect control. The burden of the user can be lightened. As a result, a supervisory system from a remote place can be implemented at a low cost.

### BRIEF DESCRIPTION OF THE DRAWINGS

FIG. 1 is a configuration diagram showing the whole of a network supervisory system for controlling a video switchover device, according to an embodiment of the present invention;
FIG. 2 is a systematic diagram of the video monitoring equipment shown in FIG. 1 for controlling the video switchover device;
FIG. 3 is a configuration diagram showing the whole of a network supervisory system for controlling a video multiplexing device, according to another embodiment of the present invention;
FIG. 4 is a systematic diagram of the video monitoring equipment shown in FIG. 3 for controlling the video multiplexing device;
FIG. 5 is a configuration diagram showing the whole of a network supervisory system for controlling a video recording device via a video switchover device and a video multiplexing device, according to another embodiment of the present invention;
FIG. 6 is a systematic diagram of the video monitoring equipment shown in FIG. 5 for controlling the video recording device via the video switchover device and the video multiplexing device;

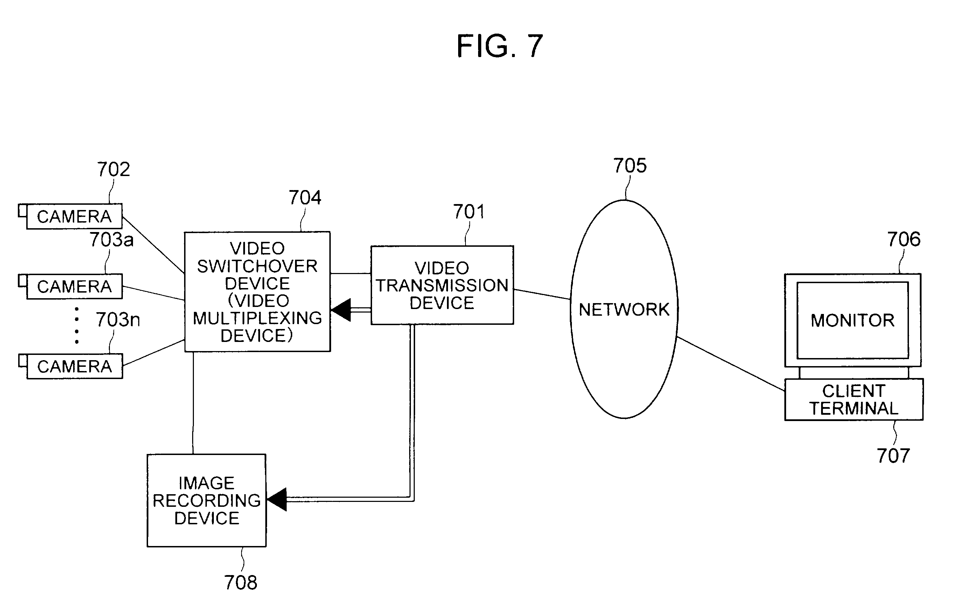

FIG. 7 is a diagram of a whole network supervisory system for controlling a video switchover device, a video multiplexing device, and an image recording device, according to another embodiment of the present invention;

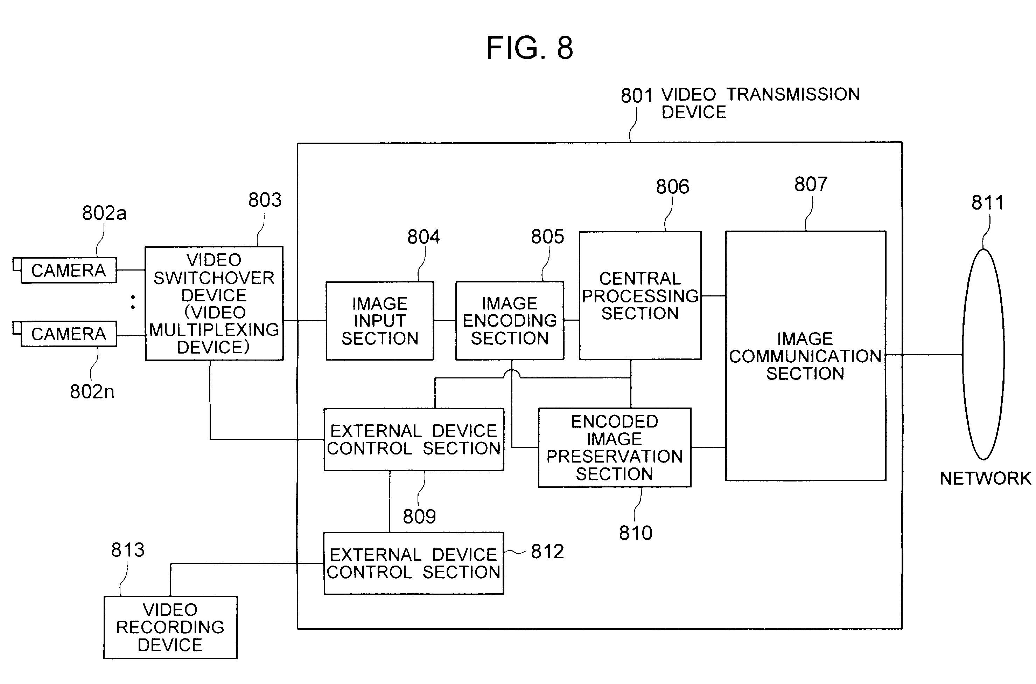

FIG. 8 is a systematic diagram of the video monitoring equipment shown in FIG. 7 for controlling a video switchover device, a video multiplexing device, and an image recording device;
FIG. 9 is a configuration diagram showing the whole of a network supervisory system for controlling an image recording device, according to another embodiment of the present invention;
FIG. 10 is a systematic diagram of the video monitoring equipment shown in FIG. 9 for controlling the image recording device;
FIG. 11 is a configuration diagram showing the whole of a network supervisory system for controlling a video output control device, according to another embodiment of the present invention;
FIG. 12 is a systematic diagram of the video monitoring equipment shown in FIG 11 for controlling a video output control device;
FIG. 13 is a configuration diagram of an external device control section for associating input numbers with output numbers of a video switchover device, according to an embodiment of the present invention;
FIG. 14 is a configuration diagram of an external device control section for conducting sequence processing of a video switchover device, according to an embodiment of the present invention;
FIG. 15 is a configuration diagram of an image input section for effecting video input switchover, according to an embodiment of the present invention;
FIG. 16 is a configuration diagram of an encoded image preservation section including a time order image storage section, according to an embodiment of the present invention;
FIG. 17 is a configuration diagram of an encoded image preservation section including a terminal number storage section and a reproduction control section, according to an embodiment of the present invention;
FIG. 18 is a systematic diagram of a video monitoring equipment including a user information administration section, according to another embodiment of the present invention;
FIG. 19 is a configuration diagram of a user information administration section including a user information storage section and a user authentication section, in FIG. 18;
FIG. 20 is a configuration diagram of an external device conversion section including a command storage section and a command conversion section, according to an embodiment of the present invention;
FIG. 21 is a configuration diagram of an external device conversion section including a command expansion section, a command output control section, and a timer, according to an embodiment of the present invention;
FIG. 22 is a configuration diagram of an external device conversion section including an alarm information administration section, a command input and output section, and an alarm information conversion section, according to an embodiment of the present invention;
FIG. 23 is a configuration diagram of an external device conversion section including an information input and output section and a display data generation section, according to an embodiment of the present invention;
FIG. 24 is a configuration diagram of an external device conversion section including an information conversion section, according to an embodiment of the present invention;
FIG. 25 is a configuration diagram of an external device conversion section including an information conversion section and an information preservation section, according to an embodiment of the present invention;
FIG. 26 is a configuration diagram of an external device conversion section including a command control section, a command reception section, and a time administration section, according to an embodiment of the present invention;
FIG. 27 is a configuration diagram of an external device conversion section including a command output section, according to an embodiment of the present invention;
FIG. 28 is a configuration diagram of an external device conversion section including a command output conversion section and a command output section, according to an embodiment of the present invention;
FIG. 29 is a systematic diagram of a video monitoring equipment including a line connection section, according to another embodiment of the present invention;
FIG. 30 is a configuration diagram of a line connection section including an information reception section and a circuit class storage section, according to an embodiment of the present invention;

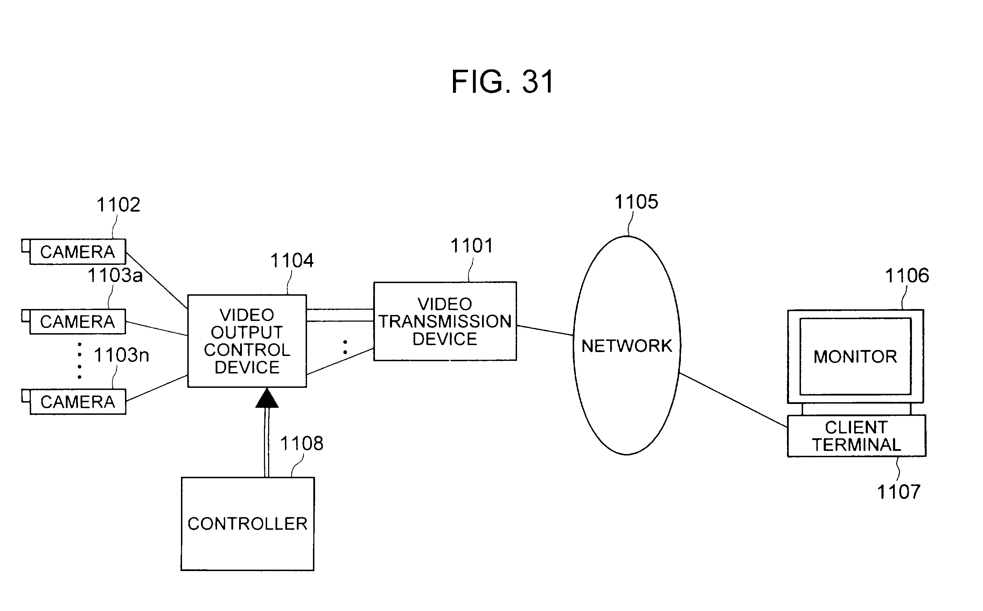

FIG. 31 is a systematic diagram showing the whole of a conventional network supervisory system; and

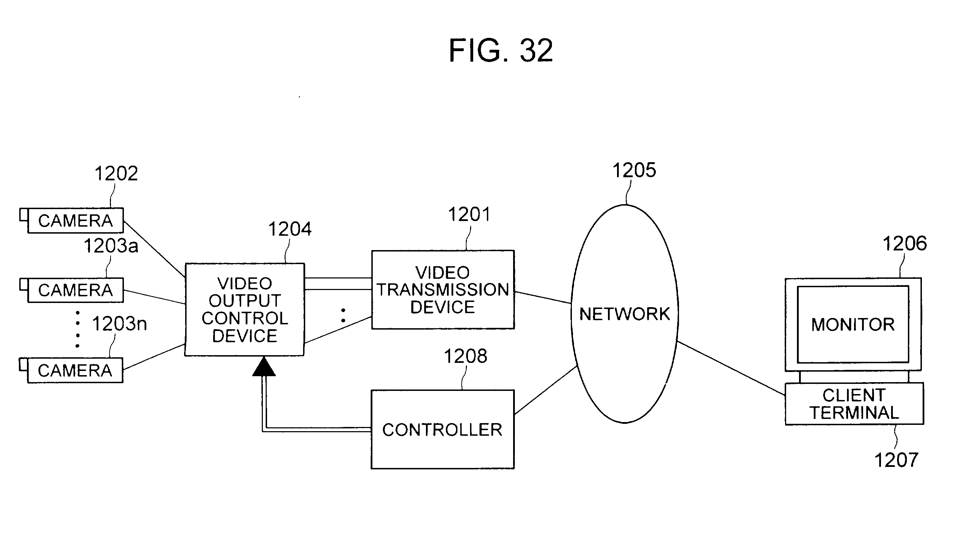

FIG. 32 is a systematic diagram showing the whole of another conventional network supervisory system.

### DESCRIPTION OF THE EMBODIMENTS

Modes for carrying out the present invention will now be described by referring to the drawing.

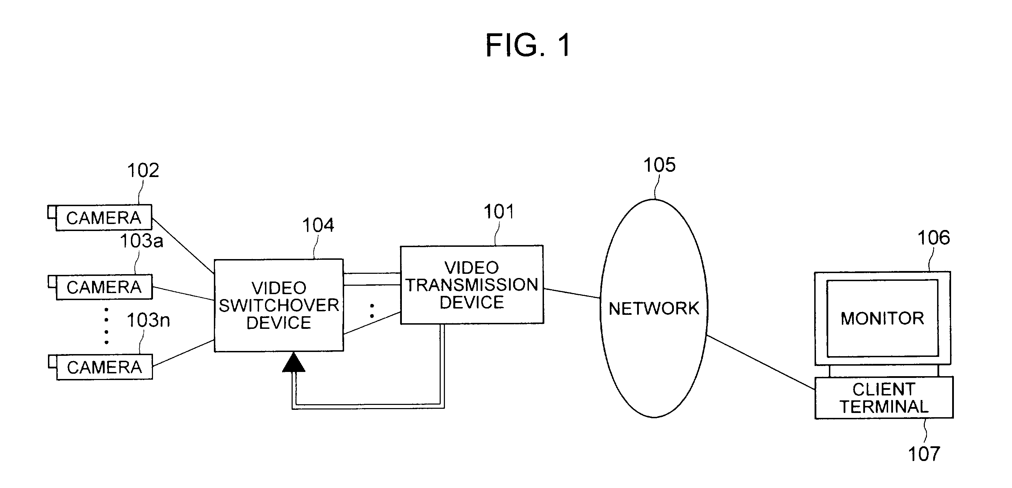

First, with reference to FIG. 1, images fed from cameras 102 and 103a to 103n serving as a plurality of image pickup sections for picking up image information of a predetermined supervisory region are transmitted to a video monitoring equipment 101 via a video switchover device 104 serving as a video output control device.

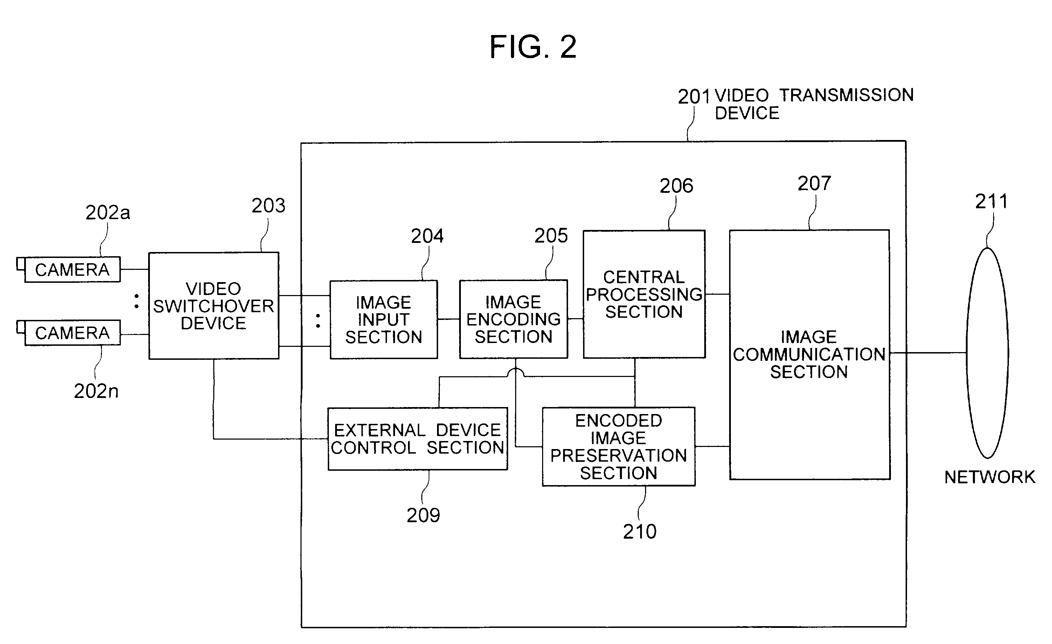

In FIG. 2, the video monitoring equipment 101 is drawn in detail as numeral 201. The video monitoring equipment 201 includes an image input section 204 for receiving an image fed from a video switchover device 203, an external device control section 209 for controlling the video switchover device 203, a central processing section 206 for taking charge of whole processing of the video monitoring equipment 201, an image encoding section 205 for encoding an image inputted by the image input section 204, an encoded image preservation section 210 for storing the image encoded by the image encoding section 205 and effecting reproduction control on the free time axis, and an image communication section 207 for conducting data transmission and reception between it and a client terminal 107 (see FIG. 1) via a network 211. It is made possible to easily control devices from the client terminal 107 installed in a remote place while watching the image.

Furthermore, by using the video switchover device 203 for effecting switchover on combinations of a plurality of video inputs and outputs as the video output control device, it is made possible to control the video switchover device 203 and distribute video outputs of a plurality of image pickup sections to the client terminal 107 via a network 211.

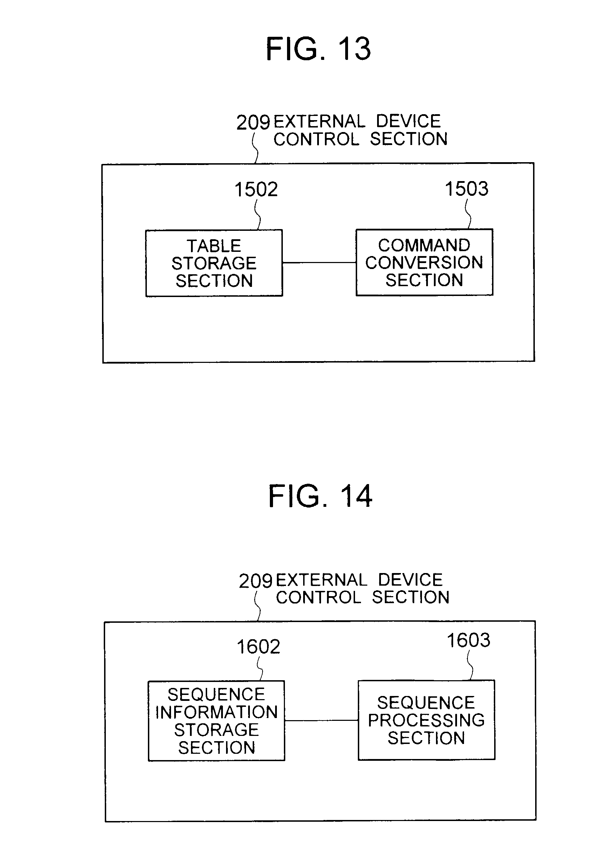

As shown in FIG. 13, the external device control section 209 includes a table storage section 1502 and a command conversion section 1503. The table storage section 1502 stores a table for associating output terminal numbers of the video switchover device 203 with input terminal numbers of the video monitoring equipment 201. The command conversion section 1503 converts a specified input terminal number to an output terminal number of the video switchover device 203 and outputs a command for controlling the video switchover device 203. It is made possible for the supervisory side of the client terminal 107 side to access without being conscious of the output number of the video switchover device 203.

As shown in FIG. 14, the external device control section 209 includes a sequence information storage section 1602 and a sequence processing section 1603. The sequence information storage section 1602 stores the order of the video switchover and a time interval for each of a plurality of video inputs. The sequence processing section 1603 executes the input video switchover. It is made possible to distribute an image obtained by conducting switchover on a plurality of video inputs one after another, to the client terminal 107 via the network 211.

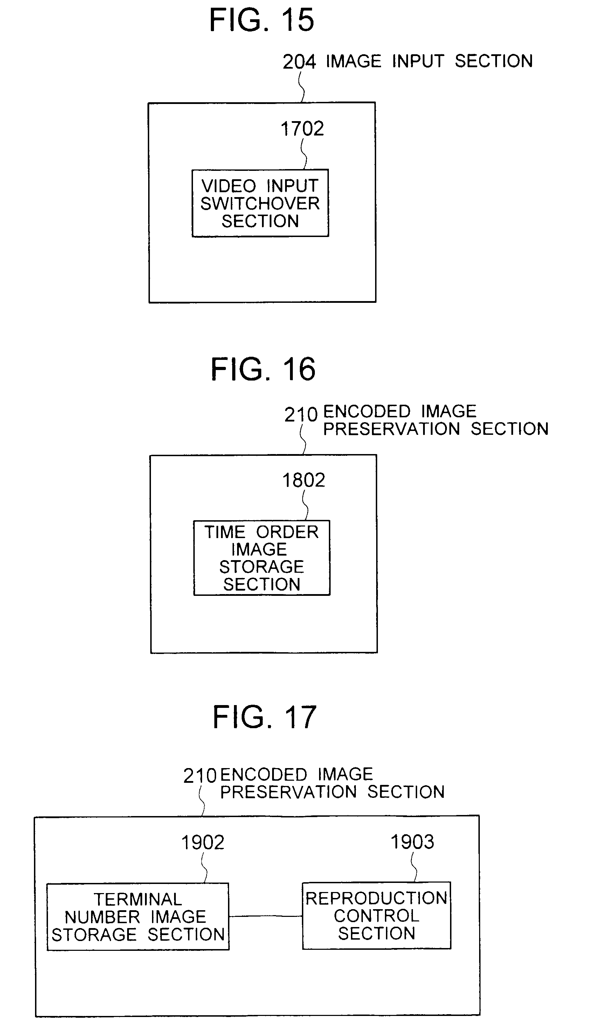

Furthermore, as shown in FIG. 15, the image input section 204 includes a video input switchover section 1702 for effecting switchover on a plurality of video inputs under the control of the central processing section 206. Furthermore, as shown in FIG. 16, the encoded image preservation section 210 includes a time order image storage section 1802 for storing images in the time axis order. By adopting such a configuration, it is made possible to switch over images distributed to a plurality of monitors 106 simultaneously, upon receiving a request given by an arbitrary client terminal 107.

Furthermore, as shown in FIG. 15, the image input section 204 includes a video input switchover section 1702 for effecting switchover on a plurality of video inputs under the control of the central processing section 206. Furthermore, as shown in FIG. 17, the encoded image preservation section 210 includes a terminal number image storage section 1902 for storing an image for each video input terminal number, and a reproduction control section 1903 for effecting reproduction control on the free time axis in association with a video input terminal number. By using such a configuration, it is thus made possible to distribute images corresponding to different video inputs, simultaneously to a plurality of client terminals 107.

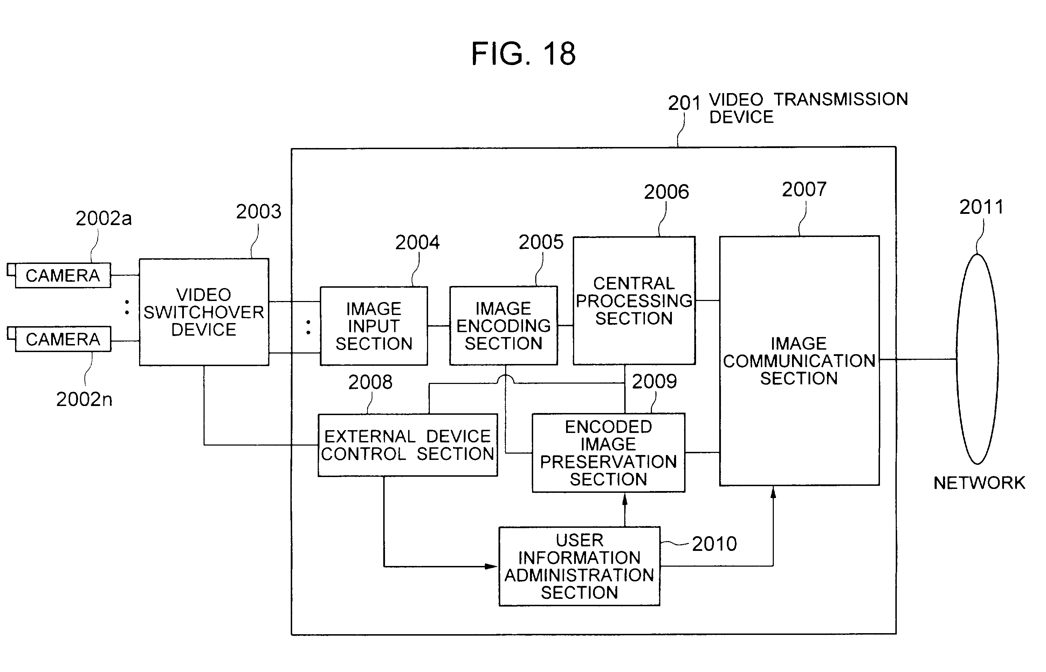

In an example shown in FIG. 18, images fed from cameras 2002a to 2002n serving as a plurality of image pickup sections for picking up image information of a predetermined supervisory region are transmitted to a video monitoring equipment 201 via a video switchover device 2003 serving as a video output control device. The video monitoring equipment 201 includes an image input section 2004 for receiving an image fed from the video switchover device 2003, an external device control section 2008 for controlling the video switchover device 2003, a central processing section 2006 for taking charge of whole processing of the video monitoring equipment 201, an image encoding section 2005 for encoding an image inputted by the image input section 2004, an encoded image preservation section 2009 for storing the image encoded by the image encoding section 2005 and effecting reproduction control on the free time axis, and an image communication section 2007 for conducting data transmission and reception between it and a client terminal 107 via a network 2011. It is made possible to easily control devices from the client terminal 107 installed in a remote place while watching the image. Up to this point, the example shown in FIG. 18 is the same as the mode shown in FIG. 2. However, the example of FIG. 18 differs from the example of FIG. 2 in that a user information administration section 2010 is interposed between the external device control section 2008 and the encoded image preservation section 2009 or the image communication section 2007.

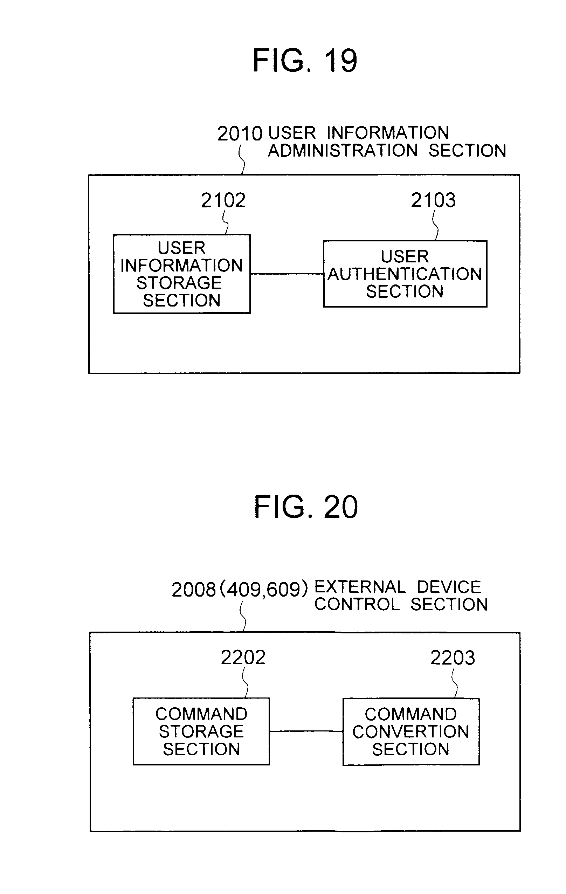

As shown in FIG. 19, the user information administration section 2010 includes a user information storage section 2102 and a user authentication section 2103. The user information storage section 2102 stores a table for associating user IDs with accessible video input terminal numbers. The user authentication section 2103 conducts user authentication on a video input terminal number on the basis of user information received by the image communication section 2007. By adopting such a configuration, distribution of images in association with user IDs and access control such as control of external devices are made possible.

Furthermore, as shown in FIG. 20, the external device control section 2008 includes a command storage section 2202 for storing an association table between input commands and output commands, and a command conversion section 2203 for converting a command received from a client terminal, by referring to the command storage section 2202. By adopting such a configuration, it is made possible to control the cameras 2002a to 2002n serving as a plurality of image pickup sections connected to the video switchover device 2003.

Furthermore, the external device control section 2008 includes a command storage section 2202 for storing an association table between input commands and output commands, and a command conversion section 2203 for converting a command received from a client terminal, by referring to the command storage section 2202. By adopting such a configuration, it is made possible to control an image recording device connected to the video switchover device 2003.

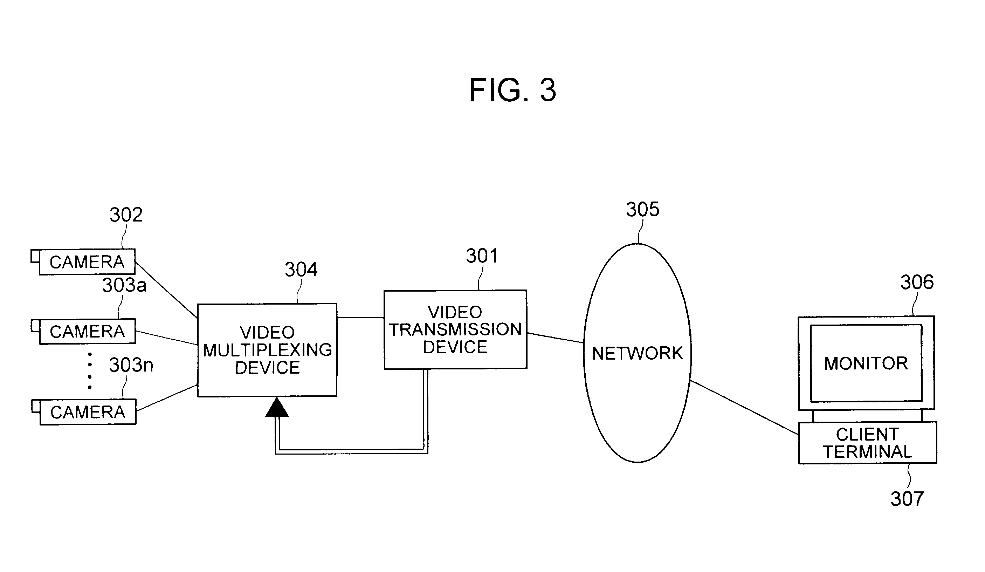

Furthermore, as shown in FIG. 3, by using a video multiplexing device 304 for multiplexing images fed from a plurality of cameras 302 and 303a to 303n, as a video output control device, it is possible to control a video multiplexing device 304 and communicate an image obtained by switching over or multiplexing video outputs of the cameras 302 and 303a to 303n serving as a plurality of image pickup sections connected to the video multiplexing device 304, via a video monitoring equipment 301 and a network 305.

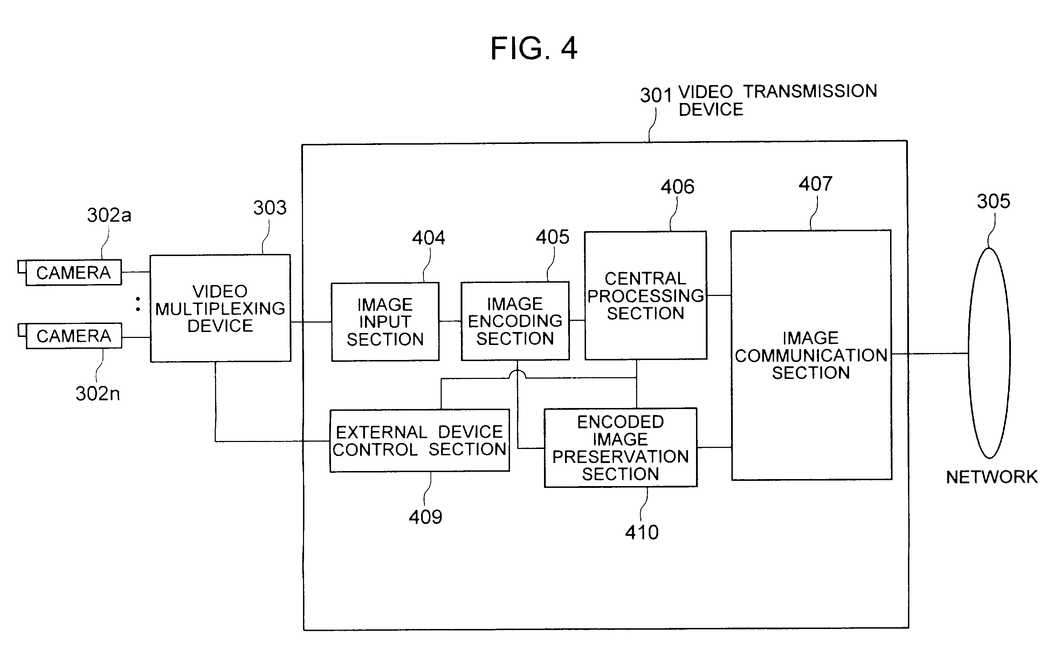

In the same way as the case of FIG. 2, according to FIG. 4, the video monitoring equipment 301 includes an image input section 404 for receiving an image fed from a video multiplexing device 303, an external device control section 409 for controlling the video multiplexing device 303, a central processing section 406 for taking charge of whole processing of the video monitoring equipment 301, an image encoding section 405 for encoding an image inputted by the image input section 404, an encoded image preservation section 410 for storing the image encoded by the image encoding section 405 and effecting reproduction control on the free time axis, and an image communication section 407 for conducting data transmission and reception between it and a client terminal 307 (see FIG. 3) via the network 305.

As shown in FIG. 20, the external device control section 409 includes a command storage section 2202 and a command conversion section 2203. The command storage section 2202 stores an association table of input commands and output commands. The command conversion section 2203 converts a command received from a client terminal 307, by referring to the command storage section 2202. By adopting such a configuration, it is made possible to control the cameras 302 and 303a to 303n serving as a plurality of image pickup sections connected to the video multiplexing device 304.

Furthermore, an external device control section 609 includes a command storage section 2202 and a command conversion section 2203. The command storage section 2202 stores an association table of input commands and output commands. The command conversion section 2203 converts a command received from a client terminal 507, by referring to the command storage section 2202. By adopting such a configuration, it is made possible to control a video recording device 508 connected to a video multiplexing device 504.

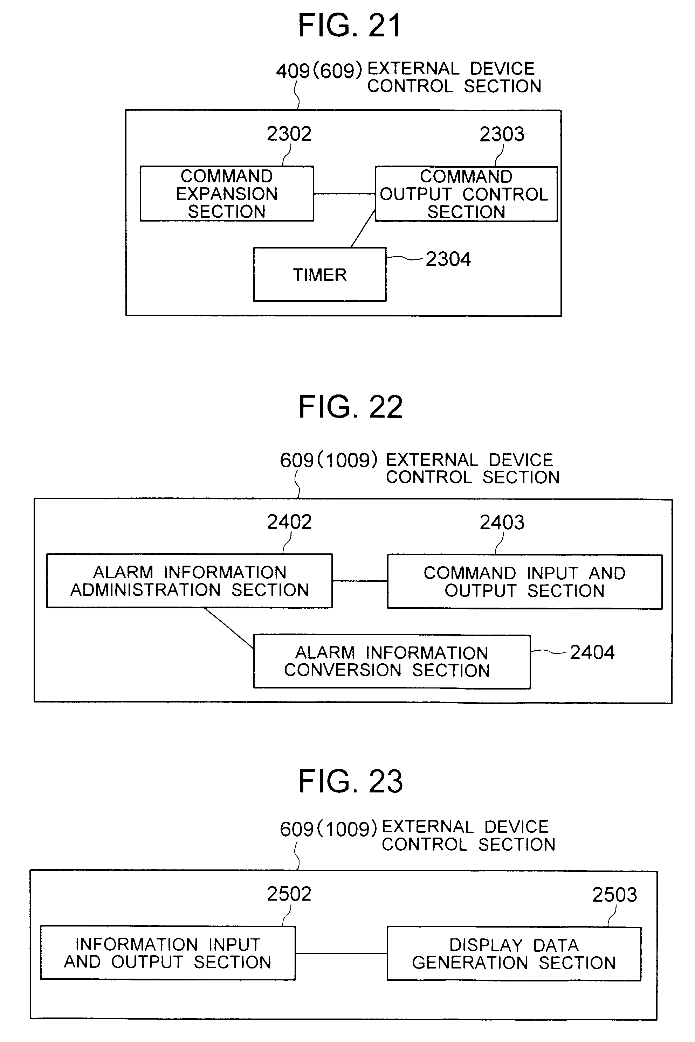

Furthermore, as shown in FIG. 21, the external device control section 609 includes a command expansion section 2302, a command output control section 2303, and a timer 2304. The command expansion section 2302 expands a series of control instructions for controlling the video multiplexing device 504 to individual control commands. The command output control section 2303 outputs control commands expanded by the command expansion section 2302, at specified time intervals. The timer 2304 administers time. By adopting such a configuration, it is made possible to control the image recording device over a series of a plurality of operations by one click or one button operation so as not cause time fluctuation or delay due to a network.

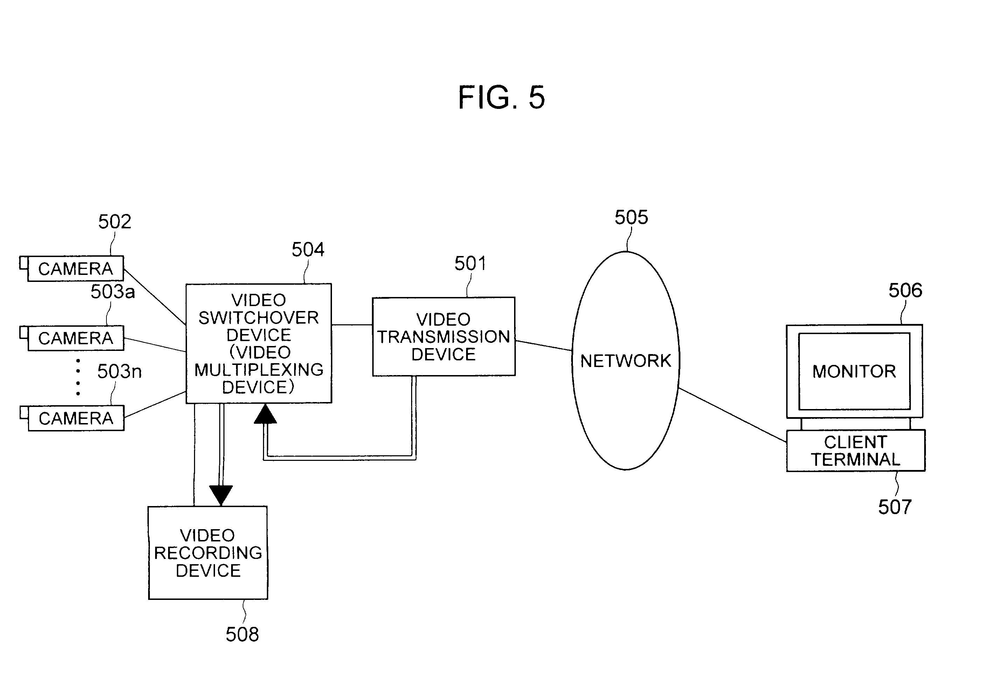

Furthermore, as shown in FIG. 5, the video switchover device 504 serving as a video multiplexing device which is a device for multiplexing images fed from a plurality of cameras 502 and 503a to 503n is used as a video output control device. As a result, control of the video switchover device 504, and an image obtained by switching over or multiplexing video outputs of the cameras 502 and 503a to 503n serving as a plurality of image pickup sections connected to the video switchover device 504 can be communicated via a video monitoring equipment 501 and a network 505.

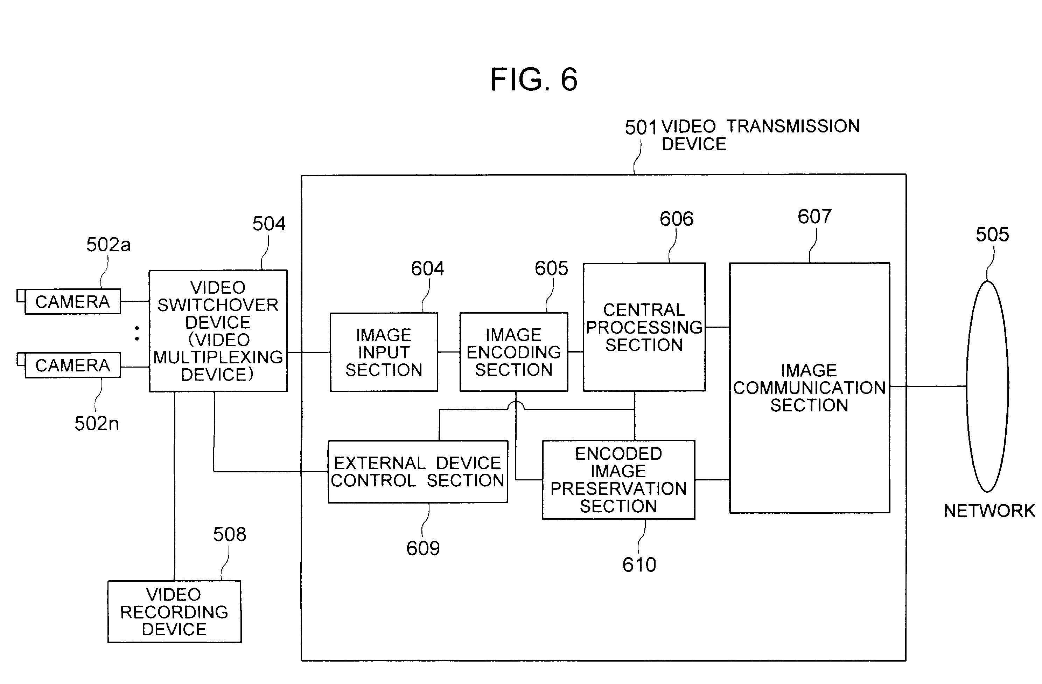

In the same way as the case shown in FIG. 2, in FIG. 6, the video monitoring equipment 501 includes an image input section 604 for receiving an image fed from a video switchover device 504, an external device control section 609 for controlling the video switchover device 504, a central processing section 606 for taking charge of whole processing of the video monitoring equipment 501, an image encoding section 605 for encoding an image inputted by the image input section 604, an encoded image preservation section 610 for storing the image encoded by the image encoding section 605 and effecting reproduction control on the free time axis, and an image communication section 607 for conducting data transmission and reception between it and a client terminal via a network 505.

In the present example, a video recording device 508 which is a device capable of recording a plurality of images while effecting switchover on a plurality of images is used as a video output control device. It is made possible to control the video recording device 508 and communicate images of the cameras 502a to 502n serving as a plurality of image pickup sections, via the network 505.

Furthermore, as shown in FIG. 22, an external device control section 609 includes an alarm information administration section 2402 for receiving an alarm and recording hysteresis, a command input and output section 2403 for conducting data transmission and reception with the video recording device 508, and an alarm information conversion section 2404 responsive to a request sent from a client terminal 507 via the network 505 for retrieving data of the alarm information administration section 2402 and converting a command. It is made possible to retrieve alarm image information recorded in the video recording device 508, via the network 505.

Furthermore, as shown in FIG. 23, the external device control section 609 includes an information input and output section 2502 for acquiring display information from the video recording device 508 via a control line, and a display data generation section 2503 for generating display data on the basis of acquired display information. As a result, information acquired from the video recording device 508 is converted to character information and delivered to a client terminal 507 via the network 505. Thus the information can be made easy to read.

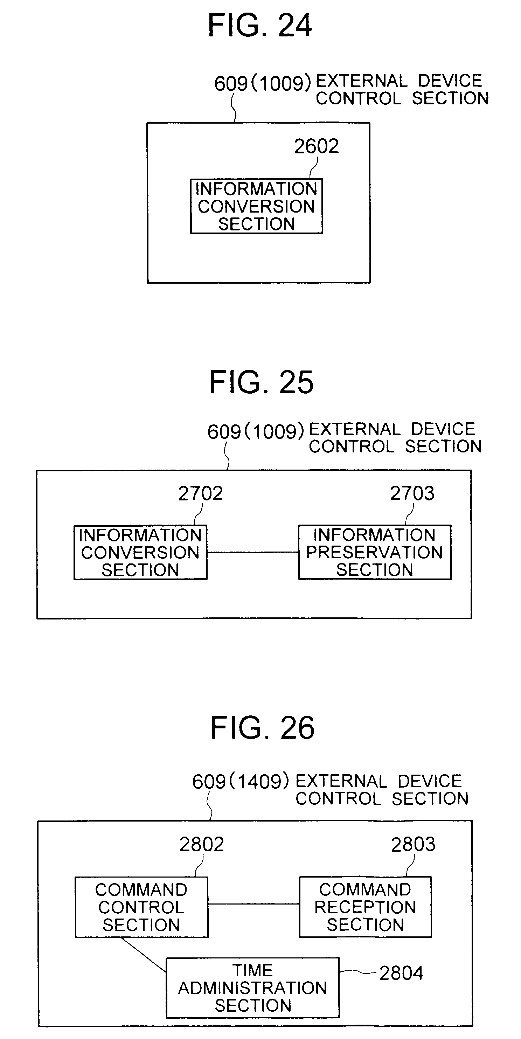

Furthermore, as shown in FIG. 24, the external device control section 609 includes an information conversion section 2602 for converting a command which has been sent via the network by clicking once on the client terminal 507. It is possible to reproduce a stored image by one click.

Furthermore, as shown in FIG. 25, the external device control section 609 includes an information conversion section 2702 for converting video information to character information, and an information preservation section 2703 for preserving information converted by the information conversion section 2702. As a result, the video information can be taken out as character information.

Furthermore, as shown in FIG. 26, the external device control section 609 includes a command reception section 2803 for receiving a control signal from the client terminal 507 via the network 505, a time administration section 2804 for administering the current time, and a command control section 2802 for interpreting the received command and sending control signals to the time administration section 2804 and external devices to attain time synchronization. It is made possible to attain time synchronization between external devices and the video monitoring equipment 501.

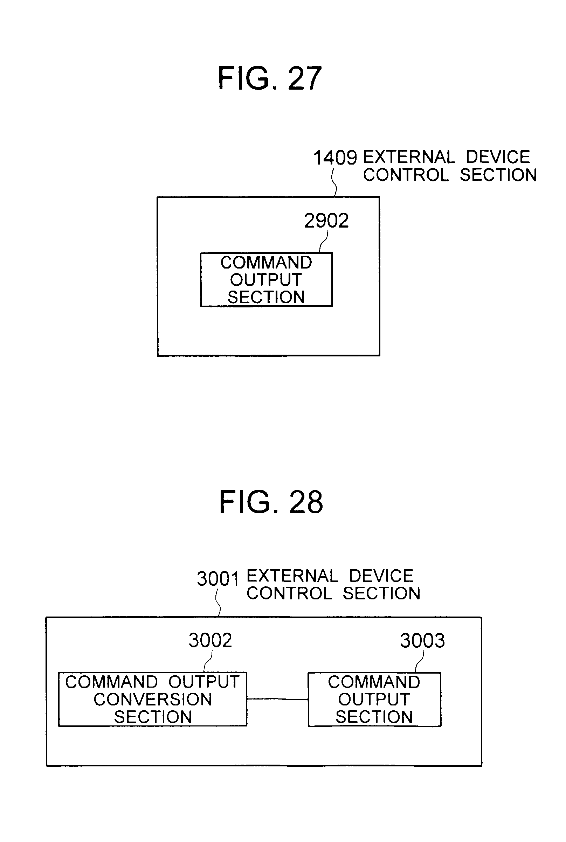

Furthermore, as shown in FIG. 27, the external device control section 609 includes a command output section 2902 for receiving a command from the client terminal 507 via the network 505. It becomes possible to control a plurality of devices simultaneously.

Furthermore, as shown in FIG. 28, the external device control section 609 includes a command output conversion section 3002 for receiving a command from the client terminal 507 via the network 505, and a command output section 3003 for transmitting control commands to respective terminals. It is made possible to control a plurality of devices simultaneously by one click.

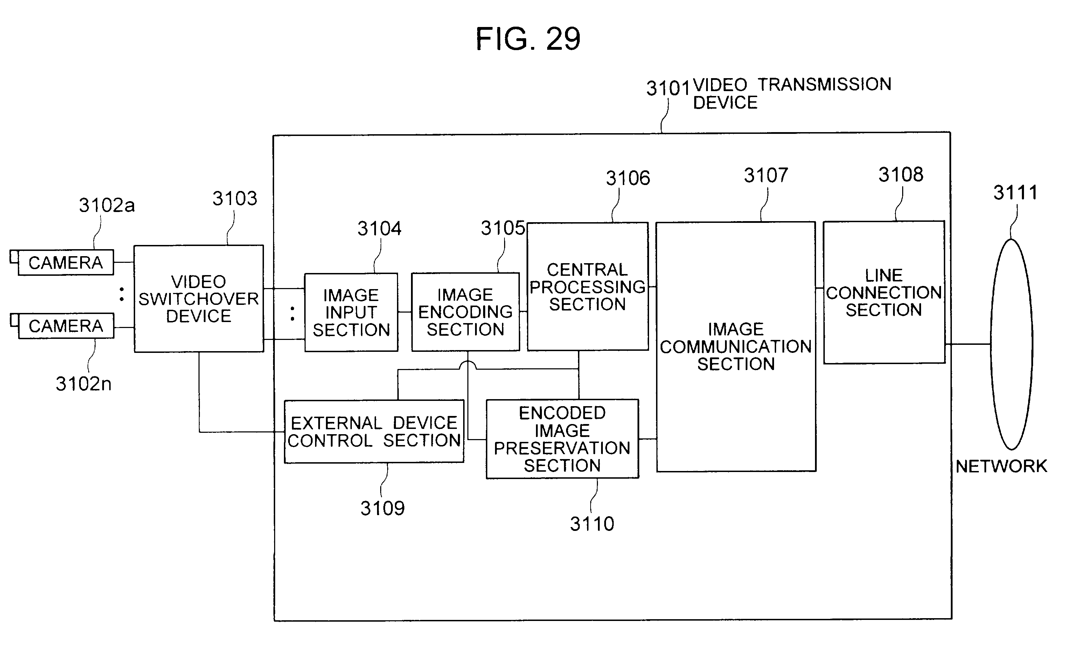

In an example shown in FIG. 29, images fed from cameras 3102a to 3102n serving as a plurality of image pickup sections for picking up image information of a predetermined supervisory region are transmitted to a video monitoring equipment 3101 via a video switchover device 3103 serving as a video output control device. The video monitoring equipment 3101 includes an image input section 3104 for receiving an image fed from the video switchover device 3103, an external device control section 3109 for controlling the video switchover device 3103, a central processing section 3106 for taking charge of whole processing of the video monitoring equipment 3101, an image encoding section 3105 for encoding an image inputted by the image input section 3104, an encoded image preservation section 3110 for storing the image encoded by the image encoding section 3105 and effecting reproduction control on the free time axis, and an image communication section 3107 for conducting data transmission and reception between it and a client terminal via a network 3111. It is made possible to easily control devices from the client terminal 307 installed in a remote place while watching the image. Up to this point, the example shown in FIG. 29 is the same as the mode shown in FIG. 2. However, the example of FIG. 29 differs from the example of FIG. 2 in that a line connection section 3108 is interposed between the image communication section 3107 and the network 3111.

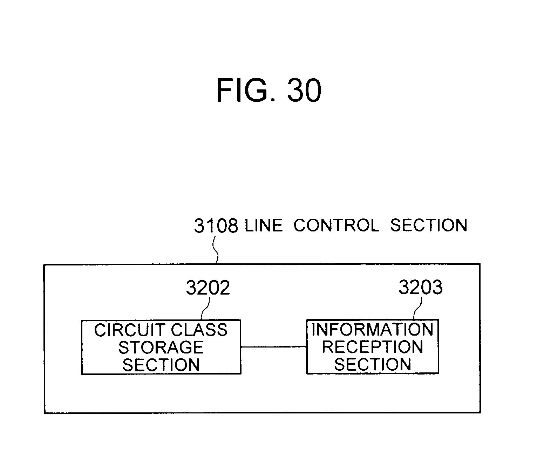

In the line connection section 3108, as shown in FIG. 30, information exchange is conducted with the network 3111, and information fed from the network 3111 is received by an information reception section 3203. It becomes possible to alter the operation according to the circuit class, from a circuit class storage section 3202.

Embodiments of the present invention will now be described by referring to the drawing.

### (Embodiment 1)

A video monitoring equipment 101 shown in FIG. 1 has a control function of a video switchover device 104. The video monitoring equipment 101 receives images fed from cameras 102 and 103a to 103n serving as a plurality of image pickup sections for picking up image information of a predetermined supervisory region, via the video switchover device 104, and controls the video switchover device 104. There are included a network 105 for connecting the cameras 102 and 103a to 103n to a monitor 106, a monitor 106 for supervising image information, a client terminal 107 for issuing an image request. It is possible to control the video switching device 104 from the client terminal 107 via the network 105 and transmit image information to the network 105.

In FIG. 2, the video monitoring equipment 101 is drawn in detail as numeral 201. The video monitoring equipment 201 includes an image input section 204 for receiving an image fed from a video switchover device 203, an external device control section 209 for controlling the video switchover device 203, a central processing section 206 for taking charge of whole processing of the video monitoring equipment 201, an image encoding section 205 for encoding an image inputted by the image input section 204, an encoded image preservation section 210 for storing the image encoded by the image encoding section 205 and effecting reproduction control on the free time axis, and an image communication section 207 for conducting data transmission and reception between it and a client terminal 107 (see FIG. 1) via a network 211.

As shown in FIG. 13, the external device control section 209 includes a table storage section 1502 and a command conversion section 1503. The table storage section 1502 stores a table for associating output terminal numbers of the video switchover device 203 with input terminal numbers of the monitoring equipment 201. The command conversion section 1503 converts a specified input terminal number to an output terminal number of the video switchover device 203 and outputs a command for controlling the video switchover device 203. It is made possible for the supervisory side to access without being conscious of the output number of the video switchover device 203.

By virtue of this configuration, it becomes possible for each client to effect camera control and supervision without considering the physical numbers of the cameras 202a to 202n connected to the video switchover device 203.

As shown in FIG. 14, the external device control section 209 includes a sequence information storage section 1602 and a sequence processing section 1603. The sequence information storage section 1602 stores the order of the video switchover and a time interval for each of a plurality of video inputs. The sequence processing section 1603 executes the input video switchover. It is made possible to preserve an image obtained by conducting switchover on a plurality of video inputs one after another, in the encoded image preservation section 210 and distribute the image to the client terminal 107 via the network 211.

By virtue of this configuration, it is made possible to supervise a plurality of channels one after another in a short time and increase the efficiency of supervision.

As shown in FIG. 15, the image input section 204 includes a video input switchover section 1702 for effecting switchover on a plurality of video inputs under the control of the central processing section 206. As shown in FIG. 16, the encoded image preservation section 210 includes a time order image storage section 1802 for storing images in the time axis order. It is made possible to switch over images distributed to a plurality of monitors simultaneously, upon receiving a request given by an arbitrary client terminal 107.

By virtue of this configuration, it is possible to distribute images to a plurality of clients 107 simultaneously according to requests and increase the efficiency of supervision.

As shown in FIG. 15, the image input section 204 includes a video input switchover section 1702 for effecting switchover on a plurality of video inputs under the control of the central processing section 206. As shown in FIG. 17, the encoded image preservation section 210 includes a terminal number image storage section 1902 for storing an image for each video input terminal number, and a reproduction control section 1903 for effecting reproduction control on the free time axis in association with a video input terminal number. It is made possible to distribute images corresponding to different video inputs, simultaneously to a plurality of client terminals 107.

By virtue of this configuration, it becomes possible to distribute the same image to all clients simultaneously upon a request of one client, and centralized supervision is made possible.

A video monitoring equipment 201 shown in FIG. 18 includes a user information administration section 2010, besides an image input section 2004, an image encoding section 2005, a central processing section 2006, an image communication section 2007, an external device control section 2008, and an encoded image preservation section 2009.

As shown in FIG. 19, the user information administration section 2010 includes a user information storage section 2102 and a user authentication section 2103. The user information storage section 2102 stores a table for associating user IDs with accessible video input terminal numbers. The user authentication section 2103 conducts user authentication on a video input terminal number on the basis of user information received by the image communication section 2007. Distribution of images in association with user IDs and access control such as control of external devices are made possible.

By virtue of this configuration, access of abnormal users can be excluded and a system configuration having a security function is made possible.

Furthermore, a video monitoring equipment 501 shown in FIG. 6 includes an image input section 604 for receiving an image fed from a video switchover device (video multiplexing device) 504, an external device control section 609 for controlling the video switchover device 504, a central processing section 606 for taking charge of whole processing of the video monitoring equipment 501, an image encoding section 605 for encoding an image inputted by the image input section 604, an encoded image preservation section 610 for storing the image encoded by the image encoding section 605 and effecting reproduction control on the free time axis, and an image communication section 607 for conducting data transmission and reception between it and a client terminal via a network 505.

Furthermore, as shown in FIG. 20, the external device control device 609 includes a command storage section 2202 for storing an association table between input commands and output commands, and a command conversion section 2203 for converting a command received from a client terminal, by referring to the command storage section 2202. It is made possible to control cameras 602a to 602n serving as a plurality of image pickup sections connected to the video switchover device 504.

By virtue of this configuration, it is made possible to control a plurality of cameras by controlling only the video switchover device 504 without individually controlling the 602a to 602n.

Furthermore, as shown in FIG. 20, the external device control section 609 includes a command storage section 2202 for storing an association table between input commands and output commands, and a command conversion section 2203 for converting a command received from a client terminal, by referring to the command storage section 2202. It is made possible to control a video recording device 508 connected to the video switchover device 504.

By virtue of this configuration, it is made possible to control the video recording device 508 by controlling only the video switchover device 504.

### (Embodiment 2)

A video monitoring equipment 301 shown in FIG. 3 has a control function of a video multiplexing device 304. The video monitoring equipment 301 receives a plurality of images fed from cameras 302 and 303a to 303n serving as a plurality of image pickup sections for picking up image information of a plurality of supervisory regions, via the video multiplexing device 304, and controls the video multiplexing device 304. There are included a network 305 for connecting the cameras 302 and 303a to 303n to a monitor 306, a monitor 306 for supervising image information, a client terminal 307 for issuing an image request. It is made possible to control the video multiplexing device 304 from the client terminal 307 via the network 305 and transmit multiplexed image information to the network 305.

As shown in FIG. 4, the video monitoring equipment 301 includes an image input section 404 for receiving an image fed from a video multiplexing device 303, an external device control section 409 for controlling the video multiplexing device 303, a central processing section 406 for taking charge of whole processing of the video monitoring equipment 301, an image encoding section 405 for encoding an image inputted by the image input section 404, an encoded image preservation section 410 for storing the image encoded by the image encoding section 405 and effecting reproduction control on the free time axis, and an image communication section 407 for conducting data transmission and reception between it and a client terminal via the network 305.

As shown in FIG. 20, the external device control section 409 includes a command storage section 2202 and a command conversion section 2203. The command storage section 2202 stores an association table of input commands and output commands. The command conversion section 2203 converts a command received from a client terminal, by referring to the command storage section 2202. It is made possible to control the cameras 302a to 302n serving as a plurality of image pickup sections connected to the video multiplexing device 303.

By virtue of this configuration, it is made possible to control a plurality of cameras by controlling only the video multiplexing device 303 without individually controlling a plurality of cameras.

Furthermore, as shown in FIG. 20, an external device control section 609 shown in FIG. 6 includes a command storage section 2202 and a command conversion section 2203. The command storage section 2202 stores an association table of input commands and output commands. The command conversion section 2203 converts a command received from a client terminal, by referring to the command storage section 2202. It is made possible to control a video recording device 508 connected to a video switchover device (video multiplexing device) 504.

By virtue of this configuration, it is made possible to control the video recording device 508 by controlling only the video switchover device 504.

Furthermore, as shown in FIG. 21, the external device control section 609 includes a command expansion section 2302, a command output control section 2303, and a timer 2304. The command expansion section 2302 expands a series of control instructions for controlling a video multiplexing device 504 to individual control commands. The command output control section 2303 outputs control commands expanded by the command expansion section 2302, at specified time intervals. The timer 2304 administers time. It is made possible to control the video recording device 508 over a series of a plurality of operations by one click or one button operation so as not cause time shaking or delay due to a network.

### (Embodiment 3)

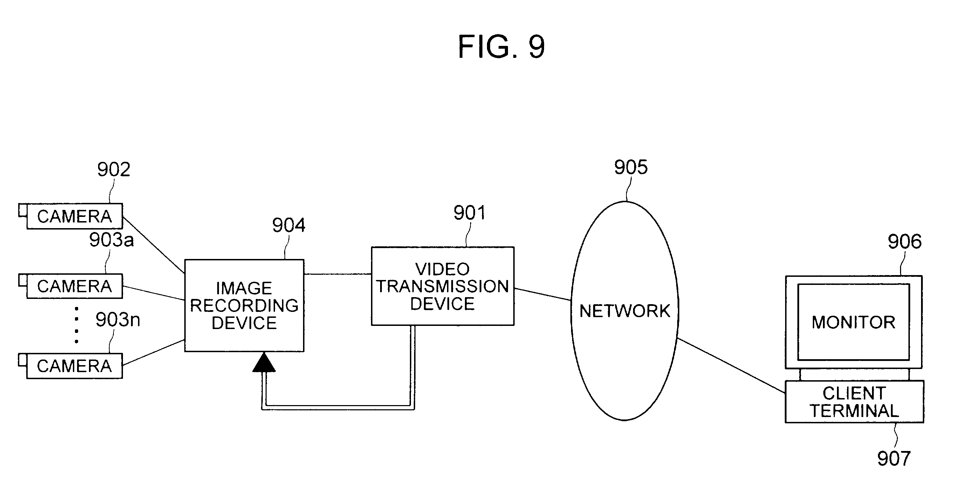

A video monitoring equipment 901 shown in FIG. 9 has a control function of an image recording device 904. The video monitoring equipment 901 receives images fed from cameras 902 and 903a to 903n serving as a plurality of image pickup sections for picking up image information of a predetermined supervisory region, via the image recording device 904, and controls the image recording device 904. There are included a network 905 for connecting the cameras 902 and 903a to 903n to a monitor 906, a monitor 906 for supervising image information, a client terminal 907 for issuing an image request. It is possible to control the image recording device 904 from the client terminal 907 via the network 905 and transmit image information to the network 905.

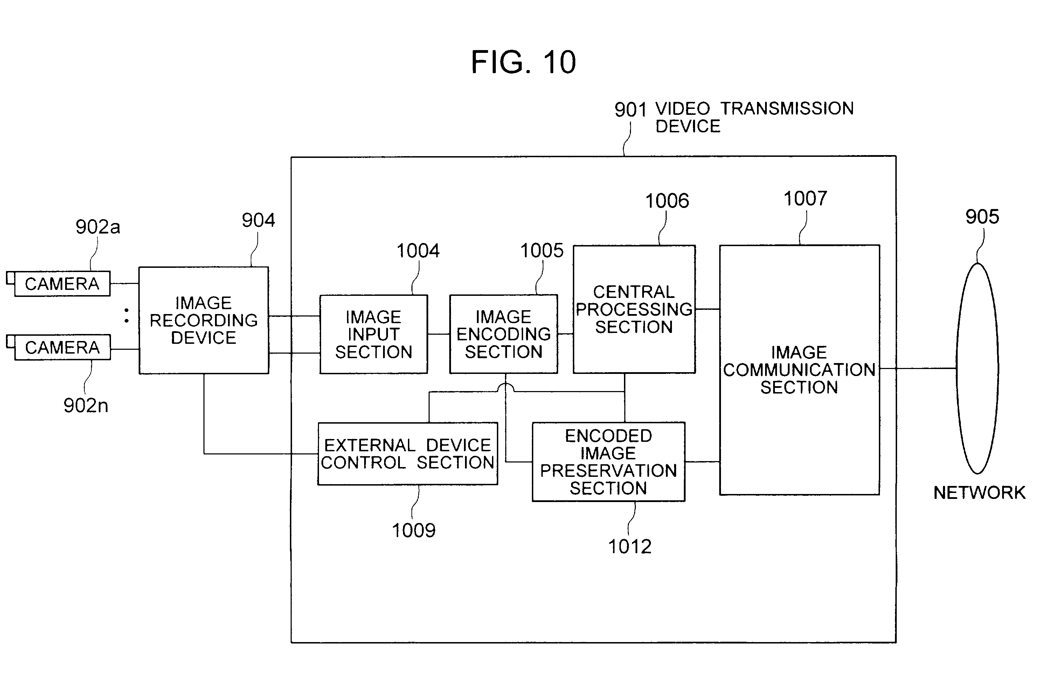

In FIG. 10, the video monitoring equipment 901 is drawn in detail. The video monitoring equipment 901 includes an image input section 1004 for receiving an image fed from the image recording device 904, an external device control section 1009 for controlling the image recording device 904, a central processing section 1006 for taking charge of whole processing of the video monitoring equipment 901, an image encoding section 1005 for encoding an image inputted by the image input section 1004, an encoded image preservation section 1012 for storing the image encoded by the image encoding section 1005 and effecting reproduction control on the free time axis, and an image communication section 1007 for conducting data transmission and reception between it and a client terminal 907 via the network 905.

Furthermore, as shown in FIG. 22, an external device control section 1009 includes an alarm information administration section 2402 for receiving an alarm and recording hysteresis, a command input and output section 2403 for conducting data transmission and reception with the image recording device 904, and an alarm information conversion section 2404 responsive to a request sent from a client terminal 907 via a network 905 for retrieving data of the alarm information administration section 2402 and converting a command. It is made possible to retrieve alarm image information recorded in the image recording device 904, via the network 905.

Furthermore, as shown in FIG. 23, the external device control section 1009 includes an information input and output section 2502 for acquiring display information from the image recording device 904 via a control line, and a display data generation section 2503 for generating display data on the basis of acquired display information. Information acquired from the image recording device 904 is converted to character information and delivered to a client terminal 906 via the network 905. Thus the information can be made easy to read.

Furthermore, as shown in FIG. 24, the external device control section 1009 includes an information conversion section 2602 for converting a command which has been sent via the network 905 by clicking once on the client terminal 907. It is possible to reproduce a stored image by one click.

Furthermore, as shown in FIG. 25, the external device control section 1009 includes an information conversion section 2702 for converting video information to character information, and an information preservation section 2703 for preserving information converted by the information conversion section 2702. The video information can be taken out as character information.

### (Embodiment 4)

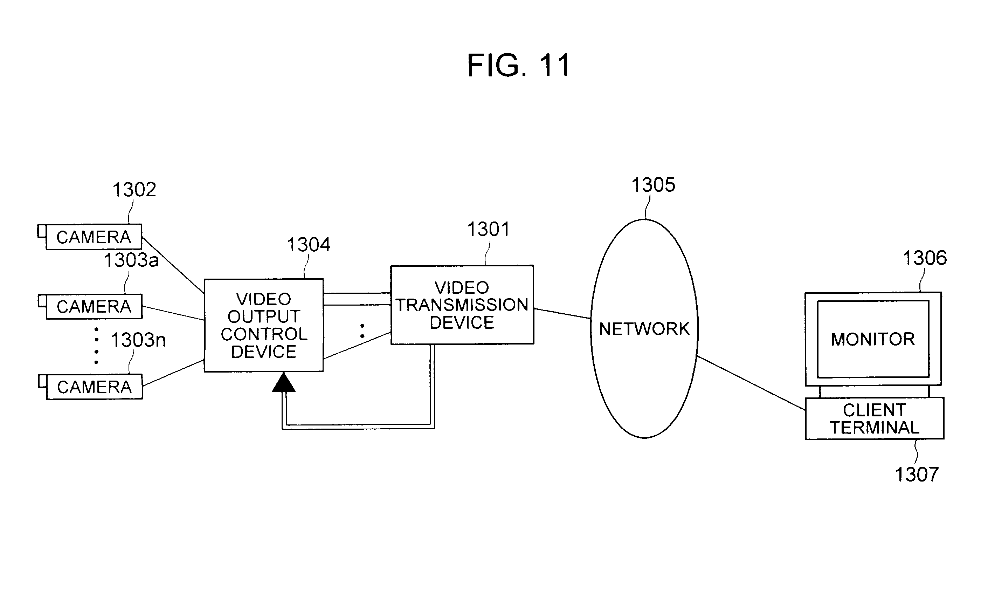

A video monitoring equipment 1301 shown in FIG. 11 has a control function of a video output control device 1304. The video monitoring equipment 1301 receives images fed from cameras 1302 and 1303a to 1303n serving as a plurality of image pickup sections for picking up image information of a plurality of supervisory regions, via the video output control device 1304, and controls the video output control device 1304. There are included a network 1305 for connecting the cameras 1302 and 1303a to 1303n to a monitor 1306, a monitor 1306 for supervising image information, a client terminal 1307 for issuing an image request. It is made possible to control the video output control device 1304 from the client terminal 1307 via the network 1305 and transmit image information to the network 1305.

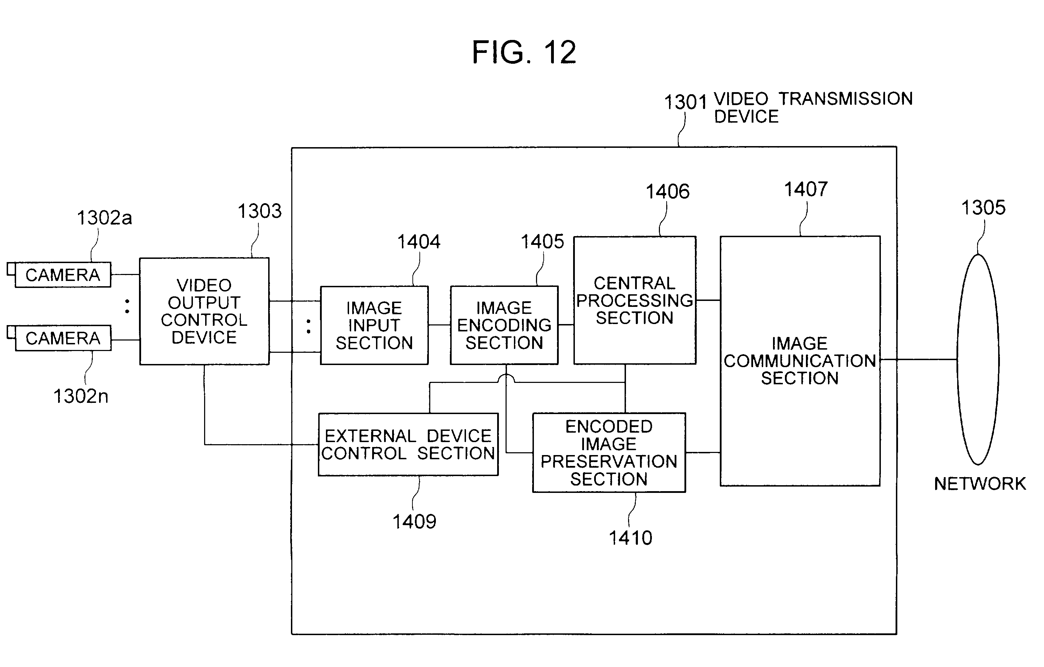

As shown in FIG. 12, the video monitoring equipment 1301 includes an image input section 1404 for receiving an image fed from a video output control device 1303, an external device control section 1409 for controlling the video multiplexing device 1303, a central processing section 1406 for taking charge of whole processing of the video monitoring equipment 1301, an image encoding section 1405 for encoding an image inputted by the image input section 1404, an encoded image preservation section 1410 for storing the image encoded by the image encoding section 1405 and effecting reproduction control on the free time axis, and an image communication section 1407 for conducting data transmission and reception between it and a client terminal 1307 via the network 1305.

As shown in FIG. 26, the external device control section 1409 includes a command reception section 2803 for receiving a control signal from the client terminal 1307 via the network 1305, a time administration section 2804 for administering the current time, and a command control section 2802 for interpreting the received command and sending control signals to the time administration section 2804 and external devices to attain time synchronization. It is made possible to attain time synchronization between external devices and the video monitoring equipment 1301.

By virtue of this configuration, operation between devices does not become asynchronous, and the system operation is facilitated.

Furthermore, as shown in FIG. 20, the external device control section 1409 includes a command output section 2902 for receiving a command from the client terminal 1307 via the network 1305. It is made possible to control a plurality of devices simultaneously.

Furthermore, as shown in FIG. 28, the external device control section 1409 includes a command output conversion section 3002 for receiving a command from the client terminal 1307 via the network 1305, and a command output section 3003 for transmitting control commands to respective terminals. It is made possible to control a plurality of devices simultaneously by one click.

### (Embodiment 5)

In an example shown in FIG. 29, images fed from cameras 3102a to 3102n serving as a plurality of image pickup sections for picking up image information of a predetermined supervisory region are transmitted to a video monitoring equipment 3101 via a video switchover device 3103 serving as a video output control device. The video monitoring equipment 3101 includes an image input section 3104 for receiving an image fed from the video switchover device 3103, an external device control section 3109 for controlling the video switchover device 3103, a central processing section 3106 for taking charge of whole processing of the video monitoring equipment 3101, an image encoding section 3105 for encoding an image inputted by the image input section 3104, an encoded image preservation section 3110 for storing the image encoded by the image encoding section 3105 and effecting reproduction control on the free time axis, and an image communication section 3107 for conducting data transmission and reception between it and a client terminal via a network 3111. It is made possible to easily control devices from the client terminal 307 installed in a remote place while watching the image. Up to this point, the example shown in FIG. 29 is the same as the above described embodiments. However, the example of FIG. 29 differs from the embodiments in that a line connection section 3108 is interposed between the image communication section 3107 and the network 3111.

As shown in FIG. 30, the line connection section 3108 exchanges information with the network 3111. The line connection section 3108 includes an information reception section 3203 for receiving information from the network 3111 and a circuit class storage section 3202 for storing states of respective lines. It is made possible to alter the operation according to the circuit class.

## Claims

1. A video monitoring equipment (201) comprising:
an image input section (204) for receiving images fed from a plurality of image pickup sections for picking up image information of a predetermined supervisory region, via a video output control device;
an external device control section (209) for controlling the video output control device;
a central processing section (206) for taking charge of whole processing of the video monitoring equipment (201);
an image encoding section (205) for encoding an image inputted by the image input section;
an encoded image preservation section (210) for storing the image encoded by the image encoding section and effecting reproduction control on a free time axis; and
an image communication section (207) for conducting data transmission and reception to/from a client terminal (107) via a network (211), images stored in the encoded image preservation section (210) being controlled from a client terminal (107) via the image communication section (207) by using network communication.

2. A video monitoring equipment (201) according to claim 1, using a video switchover device (203) for effecting switchover on a plurality of video input and output combinations, as said video output control device, said video monitoring equipment (201) comprising:
an image input section (204) for receiving images fed from a plurality of image pickup sections for picking up image information of a predetermined supervisory region, via the video switchover device (203);
an external device control section (209) for controlling the video switchover device;
a central processing section (206) for taking charge of whole processing of the video monitoring equipment;
an image encoding section (205) for encoding an image inputted by the image input section;
an encoded image preservation section (210) for storing the image encoded by the image encoding section and effecting reproduction control on a free time axis; and
an image communication section (207) for conducting data transmission and reception to/from a client terminal (107) via a network (211), control of the video switchover device and video outputs of the plurality of image pickup sections being communicated via the network.

3. A video monitoring equipment according to claim 2, wherein said external device control section (209) comprises:
a table storage section (1502) for storing a table, said table associating output terminal numbers of the video switchover device (203) with input terminal numbers of the video monitoring equipment (201); and
a command conversion section (1503) for converting a specified input terminal number to an output terminal number of the video switchover device (203) and outputting a command for controlling the video switchover device, a supervisory side being capable of accessing without being conscious of the output number of the video switchover device.

4. A video monitoring equipment according to claim 2, wherein said external device control section (209) comprises:
a sequence information storage section (1602) for storing video switchover order and a time interval for each of a plurality of video inputs; and
a sequence processing section (1603) for executing input video switchover, an image obtained by conducting switchover on a plurality of video inputs one after another being preserved in the encoded image preservation section (210) and distributed via the network (211).

5. A video monitoring equipment according to claim 2, wherein
said image input section (204) comprises a video input switchover section (1702) for effecting switchover on a plurality of video inputs under control of the central processing section (206),
said encoded image preservation section (210) comprises a time order image storage section (1802) for storing images in time axis order, and
images distributed to a plurality of monitors (106) are switched over simultaneously, upon receiving a request given by an arbitrary client terminal (107).

6. A video monitoring equipment according to claim 2, wherein
said image input section (204) comprises a video input switchover section (1702) for effecting switchover on a plurality of video inputs under control of the central processing section (206),
said encoded image preservation section (210) comprises:
a terminal number image storage section (1902) for storing an image for each video input terminal number; and
a reproduction control section (1903) for effecting reproduction control on a free time axis in association with a video input terminal number, and
images corresponding to different video inputs are distributed simultaneously to a plurality of client terminals (107).

7. A video monitoring equipment according to claim 2, comprising a user information administration section (2010),
wherein said user information administration section (2010) comprises:
a user information storage section (2102) for storing a table for associating user IDs with accessible video input terminal numbers; and
a user authentication section (2103) for conducting user authentication on a video input terminal number based on user information received by the image communication section (2007), and
distribution of images in association with user IDs and access control such as control of external devices are conducted.

8. A video monitoring equipment according to claim 2, wherein
said external device control section (2008) comprises:
a command storage section (2202) for storing an association table between input commands and output commands; and
a command conversion section (2203) for converting a command received from a client terminal, by referring to the command storage section,
a plurality of image pickup sections connected to the video switchover device (2003) can be controlled.

9. A video monitoring equipment according to claim 2, wherein said external device control section (2008) comprises:
a command storage section (2202) for storing an association table between input commands and output commands; and
a command conversion section (2203) for converting a command received from a client terminal, by referring to the command storage section, and
an image recording device connected to the video switchover device (2003) can be controlled.

10. A video monitoring equipment (301) according to claim 1, using a video multiplexing device (303) serving as a device for multiplexing images of a plurality of cameras, said video monitoring equipment (301) comprising:
an image input section (404) for receiving images fed from a plurality of image pickup sections for picking up image information of a predetermined supervisory region, via the video multiplexing device (303);
an external device control section (409) for controlling the video multiplexing device;
a central processing section (406) for taking charge of whole processing of the video monitoring equipment;
an image encoding section (405) for encoding image information fed from the video multiplexing device;
an encoded image preservation section (410) for storing the image encoded by the image encoding section and effecting reproduction control on a free time axis; and
an image communication section (407) for conducting data transmission and reception between it and a client terminal (307) via a network (305), control of the video multiplexing device and video outputs of the plurality of image pickup sections being communicated via the network.

11. A video monitoring equipment according to claim 10, comprising:
a command storage section (2202) for storing an association table of input commands and output commands; and
a command conversion section (2203) for converting a command received from a client terminal (307), by referring to the command storage section,
a plurality of image pickup sections connected to the video multiplexing device (2003) can be controlled.

12. A video monitoring equipment according to claim 10, wherein the external device control section (609) comprises:
a command storage section (2202) for storing an association table of input commands and output commands; and
a command conversion section (2203) for converting a command received from a client terminal (507), by referring to the command storage section, and
an image recording device connected to the video multiplexing device can be controlled.

13. A video monitoring equipment according to claim 10, comprising:
a command expansion section (2302) for expanding a series of control instructions for controlling the video multiplexing device (504) to individual control commands;
a command output control section (2303) for outputting control commands expanded by the command expansion section, at specified time intervals; and
a timer (2304) for administering time, the image recording device being controlled over a series of a plurality of operations by one click or one button operation so as not cause time shaking or delay due to a network.

14. A video monitoring equipment (501) according to claim 1, using a video recording device (508) which is a device capable of recording a plurality of images while effecting switchover on a plurality of images, as said video output control device, said video monitoring equipment (501) comprising:
a video input section (604) for receiving images fed from a plurality of image pickup sections for picking up image information of a predetermined supervisory region, via the video recording device (508);
an external device control section (609) for controlling the video recording device (508);
a central processing section (606) for taking charge of whole processing of the video monitoring equipment;
an image encoding section (605) for encoding image information fed from a video switching device (504);
an encoded image preservation section (610) for storing the image encoded by the image encoding section and effecting reproduction control on a free time axis; and
an image communication section (607) for conducting data transmission and reception with a client terminal (507) via a network (505), control of the video recording device (508) and images of a plurality of image pickup sections being communicated via the network (505).

15. A video monitoring equipment according to claim 14, wherein said external device control section (609) comprises:
an alarm information administration section (2402) for receiving an alarm and recording hysteresis;
a command input and output section (2403) for conducting data transmission and reception with the video recording device (508);
an alarm information conversion section (2404) responsive to a request sent from a client terminal (507) via the network (505) for retrieving data of the alarm information administration section and converting a command, alarm image information recorded in the video recording device (508) being able to be retrieved, via the network (505).

16. A video monitoring equipment according to claim 14, wherein said external device control section (609) comprises:
an information input and output section (2502) for acquiring display information from the video recording device (508) via a control line;
a display data generation section (2503) for generating display data based on acquired display information, and
wherein information acquired from the video recording device (508) is converted to character information and delivered to a client terminal (507) via the network (505) so as to make the information easy to read.

17. A video monitoring equipment according to claim 14, wherein said external device control section (609) comprises:
an information conversion section (2602) for converting a command which has been sent via the network by clicking once on the client terminal (507), and
wherein a stored image can be reproduced by one click.

18. A video monitoring equipment according to claim 14, wherein said external device control section (609) comprises:
an information conversion section (2702) for converting video information to character information; and
an information preservation section (2703) for preserving information converted by the information conversion section, the video information being able to be taken out as character information.

19. A video monitoring equipment according to claim 1, wherein said external device control section comprises:
a command reception section (2803) for receiving a control signal from the client terminal (507) via the network (505);
a time administration section (2804) for administering current time; and
a command control section (2802) for interpreting a received command and sending control signals to the time administration section and external devices to attain time synchronization, time synchronization between external devices and the video monitoring equipment (501) being attained.

20. A video monitoring equipment according to claim 1, wherein said external device control section comprises:
a command output section (2902) for receiving a command from the client terminal via the network, and
a plurality of devices can be controlled simultaneously.

21. A video monitoring equipment according to claim 1, wherein said external device control section (3001) comprises:
a command output conversion section (3002) for receiving a command from the client terminal via the network; and
a command output section (3003) for transmitting control commands to respective terminals, and
wherein a plurality of devices can be controlled simultaneously by one click.

22. A video monitoring equipment according to claim 1, 2, 10, or 16 wherein
an information reception section (3203) for conducting information exchange with the network (3111) and receiving information from the network; and
a circuit class storage section (3202) for storing states of respective line states, and
wherein operation is conducted according to the circuit class.
